# EUROPÄISCHE PATENTSCHRIFT

(11) **EP 0 790 210 B1**
(45) Veröffentlichungstag und Bekanntmachung des Hinweises auf die Patenterteilung: **19.12.2001**
(21) Anmeldenummer: 97102036.7
(22) Anmeldetag: 08.02.1997
(51) Int. Cl.: B65H 75/36, H02G 1/08

(54) **Vorrichtung zum Aufnehmen und Abziehen eines biegeelastischen, strangförmigen Materials**
Device for taking up and paying out flexible elastic strand materials
Dispositif pour enrouler et dévider des materiaux en forme de bande flexibles élastiques

(30) Priorität: 14.02.1996 DE 19605410
(43) Veröffentlichungstag der Anmeldung: 20.08.1997
(73) Patentinhaber: Katimex-Cielker GmbH, 54584 Jünkerath (DE)
(72) Erfinder: Cielker, Werner, verstorben (DE)
(74) Vertreter: Wanischeck-Bergmann, Axel, Dipl.-Ing.

(56) Entgegenhaltungen:
- EP-A- 0 309 216
- DE-A- 3 031 570
- US-A- 4 007 585
- US-A- 4 413 808
- US-A- 4 655 399
- US-A- 4 944 465

## Beschreibung

Die Erfindung betrifft eine Vorrichtung zum Aufnehmen und Abziehen eines biegeelastischen, strangförmigen Materials, insbesondere eines im Querschnitt vorzugsweise kreisförmig ausgebildeten Schub- und Zugdrahtes, insbesondere aus Glasfaserkunststoff, vorzugsweise zum Einziehen von Kabeln, Lichtleitern und/oder sonstigen Leitungen in Kabel- oder Leitungsschutzrohre oder Leerrohre, mit einer Speichertrommel, an deren Innenwandung sich das biegeelastische Material anlegt, und einem Gehäuse oder einem Lagergestell, in welchem eine Drehachse zur drehbaren Lagerung der Speichertrommel angeordnet ist, wobei das strangförmige Material nach dem Austritt aus der Speichertrommel und vor dem Austritt aus dem Gehäuse oder dem Lagergestell zumindest über einen

Teilabschnitt mittels einem kraftschlüssig auf das strangförmige Material wirkenden Antriebsmittels antreibbar ist.

Aus der DE 30 31 570 C3 ist beipielsweise eine gattungsgemäße Vorrichtung zum Aufnehmen und Abziehen eines biegeelastischen, strangförmigen Materials bekannt. Diese vorbekannte Vorrichtung weist eine drehbar gelagerte Speichertrommel auf, an deren Innenmantel sich das biegeelastische Material anlegt. Ferner weist diese vorbekannte Vorrichtung ein Gehäuse auf, in welchem die Speichertrommel drehbar angeordnet ist.

Darüber hinaus sind Vorrichtungen bekannt, bei denen das biegeelastische, strangförmige Material in einer käfigartigen Aufnahmeeinrichtung aufgenommen bzw. von dieser abgezogen wird. Hierbei weist die käfigartige Speichereinrichtung eine Mittelachse auf, die gleichzeitig Drehachse ist, an welcher mehrere, in der Regel zumindest drei, im wesentlichen u-förmige Stabelemente befestigt sind, deren in Achsrichtung der Speichereinrichtung verlaufende Stege auf einer Kreisbahn liegen. An diesen Stegen legt sich das biegeelastische, strangförmige Material an, so dass es durch seine Eigenspannung und das Bestreben, das Material gestreckt zu halten, an Stegen und zwischen Schenkeln der u-förmigen Stäbe anliegt. Die käfigartige Speichereinrichtung ist in einem Lagergestell drehbar gelagert und wird insbesondere dann verwendet, wenn ein sehr langes, biegeelastisches, strangförmiges Material mit hohem Gewicht aufgenommen und abgezogen werden soll. Demgegenüber dient die in der DE 30 31 570 C3 beschriebene Vorrichtung insbesondere der Aufnahme von strangförmigem Material in einem Längenbereich von ungefähr 20 bis 30 Metern. Hierbei ist die Aufnahmekapazität von der konstruktiv gegebenen Größe der Vorrichtung abhängig.

Die voranstehend beschriebenen Vorrichtungen zum Aufnehmen und Abziehen eines biegeelastischen, strangförmigen Materials haben sich in der Praxis bewährt. Mit zunehmender Länge des aufzunehmenden und abzuziehenden biegeelastischen, strangförmigen Materials hat es sich jedoch gezeigt, dass das Abziehen und Aufwickeln des strangförmigen Materials große Kräfte erfordert.

Ferner sind aus dem Stand der Technik Vorrichtungen gemäß US-A-4 655 399 bekannt, die zum Aufnehmen und Abziehen eines Schlauches vorgesehen sind. Eine derartige Vorrichtung besteht aus einer Wickelwelle, die über einen Kurbelantrieb drehbar ist. Mit der Wickel über einen Treibriemen verbunden ist eine drehbar gelagerte Gewindestange, entlang welcher ein Führungselement in

Längsachsenrichtung der Gewindestange bewegbar ist. Dieses Führungselement dient der Führung des ab- bzw. aufzuwickelnden Schlauches. Hierzu kann beispielsweise ein Treibriemen vorgesehen sein, der auf die Oberfläche des Schlauches wirkt.

Ausgehend von diesem Stand der Technik liegt der Erfindung die **Aufgabe** zugrunde, eine gattungsgemäße Vorrichtung derart weiterzuentwickeln, dass das Aufnehmen und Abziehen des biegeelastischen, strangförmigen Materials auch dann erleichtert, insbesondere mit geringen Kräften durchführbar ist, wenn große Längen des Materials auf- bzw. abgewickelt werden müssen.

Die **Lösung** dieser Aufgabenstellung sieht vor, dass das strangförmige Material nach dem Austritt aus dem Gehäuse oder dem Lagergestell zumindest über einen Teilabschnitt mittels eines kraftschlüssig auf das strangförmige Material wirkenden Antriebsmittels antreibbar ist.

Demzufolge ist erfindungsgemäß vorgesehen, dass auf das strangförmige Material im Bereich des Gehäuses bzw. des Lagergestells über eine Teilstrecke eine Kraft einwirkt, welche die Bewegung des strangförmigen Materials beim Herausziehen aus dem Gehäuse bzw. der Speichertrommel oder beim Einschieben desgleichen in das Gehäuse bzw. das Lagergestell, unterstützt. Diese Kraft wirkt kraft- bzw. reibschlüssig auf das strangförmige Material, wobei vorzugsweise solche Antriebsmittel verwendet werden, die im wesentlichen annähernd schlupffrei oder mit sehr geringem Schlupf arbeiten.

Hierbei hat es sich als vorteilhaft herausgestellt, das Antriebsmittel als endlosen Treibriemen auszubilden, welcher über zumindest zwei Riemenscheiben umläuft, wobei zumindest eine Riemenscheibe auf der Drehachse drehfest befestigt und zumindest eine Riemenscheibe angetrieben ist. Somit kann beispielsweise eine erste Riemenscheibe vorgesehen sein, die beispielsweise drehfest auf der Drehachse der Speichertrommel oder einer parallel zu dieser verlaufenden Achse befestigt ist und von einem Treibriemen über einen Teilumfangsbereich umschlungen ist. Der Treibriemen läuft dann über eine zweite Riemenscheibe, die mit einem Antrieb versehen ist. Durch die Drehung der zweiten Riemenscheibe wird die erste Riemenscheibe über den Treibriemen angetrieben, wobei der Treibriemen die Antriebskraft reibschlüssig auf das strangförmige Material überträgt, d. h. daß das strangförmige Material derart zu dem Treibriemen verläuft, daß sich die Bewegung des Treibriemens im wesentlichen schlupffrei oder zumindest mit sehr geringem Schlupf auf das strangförmige Material überträgt und das Ab- und Aufwickeln des strangförmigen Materials unterstützt.

Vorzugsweise ist das strangförmige Material über einen Teilumfang zumindest einer Riemenscheibe zwischen der Riemenscheibe und dem Treibriemen angeordnet, so daß das strangförmige Material einerseits auf der Riemenscheibe aufliegt und andererseits von dem Treibriemen abgedeckt ist, so daß sich die Spannkraft des Treibriemens zumindest teilweise über das strangförmige Material auf die Riemenscheibe überträgt. Bei dieser Ausgestaltung überträgt der Treibriemen die Antriebskraft über das strangförmige Material auf die Riemenscheibe, wodurch eine im wesentlichen schlupffreie Bewegung des strangförmigen Materials mit der Riemenscheibe und dem Treibriemen gegeben ist.

Der Treibriemen kann als Zahnriemen und zumindest eine Riemenscheibe als Zahnscheibe ausgebildet sein. Vorteilhaft ist es hierbei jedoch, wenn sowohl die eine als auch die andere Riemenscheibe als Zahnscheibe ausgebildet sind. Die Kraftübertragung zwischen dem Treibriemen und den Riemenscheiben erfolgt bei dieser Ausgestaltung formschlüssig, so daß hier von einer schlupffreien Antriebsanordnung ausgegangen werden kann.

Nach einem weiteren Merkmal der Erfindung ist vorgesehen, daß die zweite Riemenscheibe auf einer im Abstand zur Drehachse angeordneten Achse innerhalb des Gehäuses oder des Gestells angeordnet ist. Vorzugsweise ist die auf der Achse drehfest befestigte Riemenscheibe angetrieben.

Nach einer Weiterbildung der Erfindung ist vorgesehen, daß der Treibriemen über zwei Riemenscheiben mit unterschiedlichem Durchmesser umläuft und daß vorzugsweise die Riemenscheibe mit dem kleineren Durchmesser angetrieben ist. Hierdurch wird ein Übersetzungsverhältnis geschaffen, das den Antrieb einer beispielsweise einen großen Durchmesser aufweisenden Riemenscheibe erleichtert, wobei die aufzuwendende Kraft verkleinert und der Drehweg vergrößert werden.

Vorzugsweise weist die auf der Drehachse drehfest angeordnete Riemenscheibe einen Durchmesser auf, der im wesentlichen mit dem Durchmesser der Speichertrommel übereinstimmt, so daß das aus der Speichertrommel auf diese Riemenscheibe auflaufende strangförmige Material nur in einem Bereich gebogen wird, der die maximale Biegemöglichkeiten des strangförmigen Materials nicht übersteigt. Die Riemenscheibe ist somit auf das strangförmige Material bzw. auf die Speichertrommel, insbesondere deren Durchmesser, abgestimmt und überschreitet auch nicht den Außendurchmesser der Speichertrommel.

Vorzugsweise hat jede Riemenscheibe eine im Querschnitt U-förmig ausgebildete Führungsnut für den Treibriemen, welche umfangsseitig angeordnet ist. Demzufolge weist die Riemenscheibe in ihrem Umfangsbereich zwei radial ausgerichtete plattenförmige Elemente auf, die sowohl den Treibriemen als auch das beispielsweise zwischen dem Treibriemen und der Riemenscheibe angeordnete strangförmige Material führen.

Bei der Verwendung eines Zahnriemens ist vorgesehen, daß im seitlichen Randbereich der Führungsnut Zahnelemente angeordnet sind, die in korrespondierende Zähne des Treibriemens eingreifen. Hierbei besteht die Möglichkeit, daß lediglich auf einer Seite der Führungsnut Zahnelemente angeordnet sind. In vorteilhafter Weise ist jedoch vorgesehen, daß an jedem plattenförmigen Element der Riemenscheibe eine Reihe mit Zahnelementen angeordnet ist, wobei das strangförmige Element zwischen den Zahnelementen geführt wird.

Eine weitere Verbesserung der Führung des strangförmigen Materials auf der Umfangsfläche des Treibriemens wird dadurch erzielt, daß im Nutgrund der Führungsnut eine im Querschnitt im wesentlichen halbkreisförmig ausgebildete Ausnehmung angeordnet ist, deren Radius mit dem Radius des strangförmigen Materials im wesentlichen übereinstimmt. Alternativ hierzu kann vorgesehen sein, daß der Treibriemen an seiner den Riemenscheiben zugewandten Fläche eine im Querschnitt im wesentlichen halbkreisförmig ausgebildete Ausnehmung hat, deren Radius mit dem Radius des strangförmigen Materials im wesentlichen übereinstimmt. Selbstverständlich besteht eine dritte Alternative darin, daß sowohl der Treibriemen an der zuvor angegebenen Stelle als auch die Riemenscheibe an der zuvor angegebenen Stelle jeweils eine halbkreisförmig ausgebildete Ausnehmung aufweisen, so daß das strangförmige Material einerseits in der Ausnehmung der Riemenscheibe und andererseits in der Ausnehmung des Treibriemens reibschlüssig mit den jeweiligen Bauelementen verbunden ist. Es wird hierbei davon ausgegangen, daß das biegeelastische, strangförmige Material einen kreisförmigen Querschnitt aufweist. Denkbar sind generell aber auch andere Querschnittsformen, beispielsweise eine quadratische Querschnittsform, wobei dann die Ausnehmungen in Treibriemen und Riemenscheibe entsprechend angepaßt sind.

Das strangförmige Material umschlingt die Riemenscheibe vorzugsweise mit einem Umschlingungswinkel zwischen 180° und 280°. Es sind daher auch größere oder kleinere Umschlingungswinkel sowie eine Mehrfachumschlingung zumindest einer aber auch beider Riemenscheiben möglich. Zur Führung des strangförmigen Materials ist vorgesehen, daß das strangförmige Material vor und/oder nach Erreichen der vom strangförmigen Material in einem Teilbereich umschlungenen Riemenscheibe in einem Führungsrohr geführt ist. Zum einen wird somit das strangförmige Material von der Speichertrommel ausgehend bis zum Erreichen der zu umschlingenden Riemenscheibe in einem Führungsrohr geführt. Zum anderen ist ein Führungsrohr vorgesehen, welches das strangförmige Material beim Abziehen aus der Speichertrommel unmittelbar nach dem Verlassen der Riemenscheibe aufnimmt und nach außerhalb des Gehäuses führt.

Auf das das strangförmige Material aus dem Gehäuse führende Führungsrohr ist vorzugsweise ein abgewinkeltes Führungselement aufsteckbar, welches drehbar auf dem Führungsrohr gehalten ist, so daß das strangförmige Material auch noch in einem Bereich außerhalb des Gehäuses geführt ist, so daß ein erleichtertes Einführen des strangförmigen Materials beispielsweise in ein Kabelrohr gewährleistet wird.

Nach einem weiteren Merkmal der Erfindung ist vorgesehen, daß das das strangförmige Material aus dem Gehäuse führende Führungsrohr seitlich neben dem Treibriemen, vorzugsweise zwischen dem Treibriemen und der Speichertrommel angeordnet ist. Das strangförmige Material wird somit nach seinem Verlassen der Riemenscheibe in einem Führungsrohr geführt, das im wesentlichen parallel zum Treibriemenabschnitt zwischen den beiden Riemenscheiben verläuft. Hierbei ist vorgesehen, daß das strangförmige Material in den Innenbereich des Gehäuses abgelenkt wird.

Bei einer Weiterentwicklung der erfindungsgemäßen Vorrichtung ist vorgesehen, daß der Treibriemen über eine Riemenscheibe manuell, vorzugsweise über eine Handkurbel angetrieben ist. Bei der Verwendung eines biegeelastischen, strangförmigen Materials mit einem größeren Querschnitt oder einer größeren Aufspul- oder Abspullänge hat es sich als vorteilhaft erwiesen, den Treibriemen über eine Riemenscheibe motorisch, insbesondere elektromotorisch oder hydromotorisch, anzutreiben. Hierbei kann zwischen einem entsprechenden Elektromotor bzw. Hydraulikmotor und der angetriebenen Riemenscheibe ein Getriebe, insbesondere ein Winkelgetriebe, mit der gewünschten Untersetzung vorgesehen sein, die ein gleichmäßiges Abziehen bzw. Aufwickeln des strangförmigen Materials ermöglicht.

Bei der Anordnung der Speichertrommel in einem Lagergestell hat es sich als vorteilhaft erwiesen, das strangförmige Material über eine außerhalb des Lagergestells angeordnete Laufrolle zu führen. Ferner ist es bei dieser Ausgestaltung vorteilhaft, die Speichertrommel als Käfig auszubilden, welcher mehrere, zumindest drei, vorzugsweise vier bis sechs, im Querschnitt L- oder U-förmig ausgebildete Haltearme hat und drehbar im Lagergestell gelagert ist. Durch die Ausgestaltung der Speichertrommel als Käfig wird insbesondere eine Material- und somit auch eine Gewichtseinsparung der Konstruktionselemente der erfindungsgemäßen Vorrichtung erzielt.

Nach einem weiteren Merkmal ist es vorgesehen, daß die von dem strangförmigen Material teilweise umschlungene Riemenscheibe drehfest auf einer Achse angeordnet ist, die parallel und versetzt zur Drehachse im Lagergestell angeordnet ist.

Vorzugsweise ist die in zumindst einer Riemenscheibe ausgebildete Führungsnut geringfügig schmaler als die Breite des Treibriemens, wodurch sich eine verbesserte Kraftübertragung zwischen dem Treibriemen und der Riemenscheibe ergibt. Der Treibriemen besteht vorzugsweise aus einem elastischen, insbesondere hochelastischen Material, welches einen hohen Haftreibungskoeffizienten aufweist. Ferner ist in vorteilhafter Weise vorgesehen, daß die Mantelflächen der Riemenscheiben und / oder die Führungsnuten der Riemenscheiben . mit einer Auflage bzw. Auskleidung aus einem elastischen Material versehen sind, mit welchem die Übertragung einer hohen Haftreibung möglich ist. Bei dieser Ausgestaltung wird ebenfalls eine verbesserte Kraftübertragung zwischen Treib-riemen und Riemenscheibe erzielt. Das elastische Material der Riemenscheibe und / oder des Treibriemens kann eine Profilierung aufweisen, um gleitfähige Verschmutzungen des strangförmigen Materials zu durchdringen und dem verdräng-ten Schmutz bzw. Fluid eine Ausweichmöglichkeit in die Zwischenräume der Profilierung zu bieten.

Als vorteilhaft hat es sich hierbei erwiesen, zwischen dem Treibriemen und den Riemenscheiben eine hohe Flächenpressung einzustellen, welche auch auf die Verschmutzungen des strangförmigen Materials wirkt und diese Verschmutzungen insbesondere in die Profilierung des elastischen Materials verdrängt.

Der Treibriemen, welcher vorzugsweise über Bandführungselemente, wie Kanten, Ösen, Haken, Rollen, Rohre, Gleitflächen, Gleitsteine, Gleitkissen, Fluidlager, Wälzlager oder dergleichen geführt ist, welche mit - oder ohne Beschichtung mit einem geringen Reibwiderstand ausgebildet sind, kann als Flachriemen mit - oder ohne Profilierung, insbesondere einer den Riemenscheiben zugewandten Verzahnung ausgebildet sein. Es ist aber auch möglich, daß der Treibriemen zumindest in einem Teilabschnitt als Kette ausgebildet ist, welcher Teilabschnitt insbesondere in dem Bereich angeordnet ist, der nicht mit dem strangförmigen Material in Kontakt tritt. Die Kette kann aber auch auf der dem strangförmigen Material zugewandten Seite Gummipolster aufweisen, die einen direkten Kontakt zwischen der Kette und dem strangförmigen Material und den damit gegebenenfalls verbundenen Beschädigungen des strangförmigen Materials verhindern.

Weiterhin ist vorgesehen, daß zumindest ein Spannelement, vorzugsweise eine Spannrolle in den Bereich des Treibriemens eingeschaltet ist. Eine weitere Alternative zur Spannrolle besteht beispielsweise auch in einem elastischen Spannelement, das vorzugsweise zwischen einem kettenförmigen Abschnitt und einem Treibriemenabschnitt eingeschaltet ist. Ferner läuft der Treibriemen vorzugsweise über zumindest eine Ablenkrolle.

Nach einem weiteren Merkmal der Erfindung ist vorgesehen, daß im Bereich des auf die Riemenscheibe auflaufenden bzw. ablaufenden Treibriemens Anpreßrollen angeordnet sind, die ein Abheben des Treibriemens und / oder des strangförmigen Materials von der Riemenscheibe in diesem Bereich verhindern und die ein Einfädeln des strangförmigen Materials zwischen Riemenscheibe und Treibriemen und / oder in die Führungsrohre manipulationsfrei ermöglichen. Durch diese Ausgestaltung werden aufwendige Reparaturarbeiten vermieden, die dann notwendig sind, wenn das strangförmige Material vollständig in die Speichertrommel eingezogen wurde und nunmehr für einen neuen Arbeitsgang erneut in die Führungsrohre eingefädelt werden soll. Das Einfädeln des strangförmigen Materials in die Führungsrohre erfolgt dann durch die entsprechend ausgebildeten, vorzugsweise eine in der Mantelfläche ausgebildete Führungsnut aufweisenden Anpreßrollen.

Ferner ist es nach einem weiteren Merkmal der Erfindung vorgesehen, daß die Speichertrommel und die Riemenscheibe auf einer gemeinsamen Drehachse gelagert sind. Bei dieser Ausgestaltung werden Reibungsverluste durch eine Verringerung der Relativbewegungen der Speichertrommel zur Riemenscheibe vermindert. Die Drehtendenz der Trommel führt dann beim Abwickeln des strangförmigen Materials zu einem Druck zwischen der Trommel und der Riemenscheibe, wobei beim Einziehen des strangförmigen Materials eine Zugbeanspruchung zwischen Treibriemen und Speichertrommel hervorgerufen wird.

Um einen größeren Umschlingungswinkel des Treibriemens zu erzielen, kann nach einem weiteren Merkmal der Erfindung vorgesehen sein, daß der Treibriemen über mehrere Umlenkrollen schleifenförmig geführt ist. Ferner kann als Alternative vorgesehen sein, daß die Riemenscheibe bzw. die Riemenscheiben am Außenumfang derselben gelagert ist bzw. sind. In diesem Fall ist es nicht notwendig, die Riemenscheibe auf einer Achse zu lagern, so daß die konstruktive Ausgestaltung der Vorrichtung insbesondere im Hinblick auf die Lagerung der Speichertrommel, welche vorzugsweise auswechselbar ausgestaltet ist, vereinfacht wird.

Darüberhinaus sind weitere Vorrichtungen und Einrichtungen vorgesehen, die der erleichterten Handhabung der erfindungsgemäßen Vorrichtung dienen. Beispielsweise kann am Ende des strangförmigen Materials eine Erkennungseinrichtung vorgesehen sein, die beispielsweise als Sichtsensor ausgebildet ist und die einen Antrieb der Riemenscheibe abschaltet, sobald die Erkennungseinrichtung an einem bestimmten Punkt innerhalb des Führungsrohre vorbeigeführt wird. Es können aber auch andere Endabschaltungseinrichtungen vorgesehen sein, die beispielsweise das Ende des strangförmigen Materials über die Umdrehungsanzahl der Speichertrommel ermitteln.

Darüberhinaus sind verschiedene Antriebsvarianten denkbar. Beispielsweise kann der Antrieb direkt auf die der Speichertrommel benachbarte Riemenscheibe wirken. Es ist aber auch denkbar, daß beide Riemenscheiben eine Aufnahme für eine umsteckbare Handkurbel haben. Derartige Aufnahmen können beispielsweise mit einer Innenverzahnung ausgebildet sein, die mit einer Außenverzahnung der Handkurbelachse zusammenwirken. Darüberhinaus kann zwischen dem Antrieb und der angetriebenen Riemenscheibe ein Zahnradgetriebe vorgesehen sein, mit welchem das Drehmoment des Antriebs formschlüssig auf die Riemenscheibe übertragbar ist, wobei über das Zahnradgetriebe auch ein bestimmtes Übersetzungsverhältnis, in Abhängigkeit des Trommeldurchmessers und der damit verbundenen Aufnahmekapazität des strangförmigen Materials einstellbar ist. Denkbar sind hier eine Vielzahl von Zahnradgetrieben, wie Kegelradgetriebe, Schneckengetriebe oder auch Planetengetriebe, wobei dann das Hohlrad des Planetengetriebes als alleiniges Traktionsrad wirkt.

Der Treibriemen kann darüberhinaus zumindest im Bereich zwischen den Riemenscheiben in Führungselementen geführt werden, um Verschmutzungen des Treibriemens im wesentlichen zu vermeiden. Denkbar ist auch, daß der Treibriemen zumindest im Bereich zwischen den Riemenscheiben über eine Vielzahl von Rollen mit geringem Durchmesser läuft, die als Anpreßelemente wirken.

Weitere Merkmale und Vorteile der Erfindung ergeben sich aus der nachfolgenden Beschreibung der zugehörigen Zeichnung, in der bevorzugte Ausführungsformen der erfindungsgemäßen Vorrichtung dargestellt sind. In der Zeichnung zeigen:
Figur 1 eine erste Ausführungsform einer Vorrichtung zum Aufnehmen und Abziehen eines biegeelastischen strangförmigen Materials in einer teilweise geschnitten dargestellten Vorderansicht;
Figur 2 die Vorrichtung gemäß Figur 1 in einer teilweise geschnitten dargestellten Rückansicht;
Figur 3 die Vorrichtung gemäß den Figuren 1 und 2 in einer geschnitten dargestellten Seitenansicht;
Figur 4 eine zweite Ausführungsform einer Vorrichtung zum Aufnehmen und Abziehen eines biegeelastischen strangförmigen Materials in einer Seitenansicht;
Figur 5 die Vorrichtung gemäß Figur 5 in einer Draufsicht;
Figur 6 eine erste Ausführungsform einer Riemenscheibe mit einem Treibriemen in geschnitten dargestellter Seitenansicht;
Figur 7 eine zweite Ausführungsform einer Riemenscheibe mit einem Treibriemen in geschnitten dargestellter Seitenansicht und
Figur 8 eine dritte Ausführungsform einer Riemenscheibe mit einem Treibriemen in geschnitten dargestellter Seitenansicht.

Eine Vorrichtung zum Aufnehmen und Abziehen eines biegeelastischen, strangförmigen Materials 1 besteht aus einer Speichertrommel 2, an deren Innenwandung 3 sich das biegeelastische Material 1 anlegt. Die Speichertrommel 2 ist in einem Gehäuse 4 drehbar gelagert, wobei das Gehäuse 4 eine Drehachse 5 aufweist, auf welcher die Speichertrommel 2 zwischen zwei Muttern 6 drehfest angeordnet ist.

Die Speichertrommel 2 besteht aus zwei im wesentlichen im Querschnitt U-förmig ausgebildeten Schalen 7, die an ihrem Randbereich einen umlaufenden Flansch 8 haben. Jeder Flansch 8 weist eine Vielzahl über den Umfang verteilte, in der Zeichnung nicht dargestellte Bohrungen auf, in welche nicht dargestellte Schraubbolzen eingesteckt sind, auf welche nicht dargestellte Muttern aufgeschraubt sind, so daß die beiden Schalen 7 im Bereich der beiden Flansche 8 miteinander verschraubt sind.

Das Gehäuse besteht aus einem Rahmen 9, der eine die Speichertrommel 2 umschließende Wandung hat. Im Rahmen 9 ist eine Trennwand 10 angeordnet, welche das Gehäuse 4 in zwei Abschnitte 11 und 12 unterteilt. Die beiden Abschnitte 11 und 12 sind mit Seitenwandungen 13 und 14 abgedeckt, wobei die Seitenwandung 13, welche den Abschnitt 12 des Gehäuses 4 abdeckt, eine Öffnung 15 aufweist. Die Drehachse 5 ist in der Trennwand 10 gelagert.

In dem Abschnitt 12 ist eine Riemenscheibe 16 auf der Drehachse 5 angeordnet und drehfest mit der Drehachse 5 verbunden. Die Riemenscheibe 16 ist in ihrem Umfangsflächenbereich im Querschnitt U-förmig ausgebildet und weist demzufolge zwei plattenförmige Elemente 17 auf. Zwischen den plattenförmigen Elementen 17 ist ein als Zahnriemen 18 ausgebildeter Treibriemen angeordnet, der die Riemenscheibe 16 über einen Teilumfangsbereich umschlingt. Der Zahnriemen 18 weist an seiner der Riemenscheibe 16 zugewandten Fläche eine Vielzahl von Zähnen 19 auf, die in korrespondierende Zahnelemente 20 eingreifen, welche beidseitig der plattenförmigen Elemente 17 auf der Umfangsfläche der Riemenscheibe 16 in gleichmäßigem Abstand umlaufend angeordnet sind.

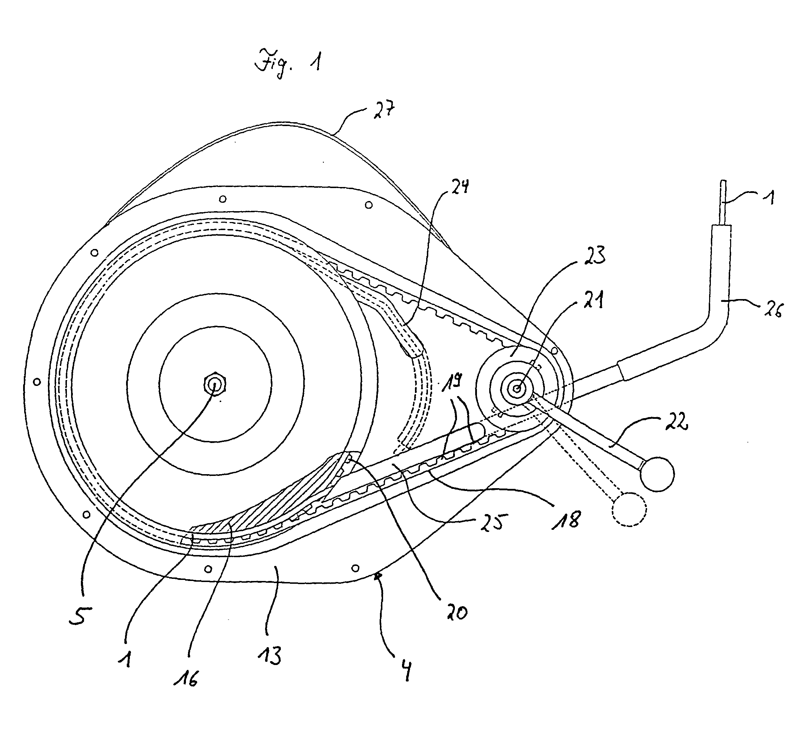

Wie insbesondere aus der Figur 1 zu erkennen ist, ist in dem Gehäuse 4 eine zweite Achse 21 angeordnet, auf der eine über eine Handkurbel 22 angetriebene zweite Riemenscheibe 23 gelagert ist, welche über einen Teilumfangsbereich von dem Zahnriemen 18 umschlungen ist. Die Riemenscheibe 23 ist ebenfalls als Zahnscheibe ausgebildet, die eine Vielzahl von Zähnen aufweist, die mit den Zähnen 19 des Zahnriemens 18 kämmend korrespondieren. Die Handkurbel 22 ist auf der Achse 21 drehfest befestigt, wobei die Achse 21 die Öffnung 15 durchgreift.

Die Riemenscheibe 23 hat einen Durchmesser, der wesentlich kleiner ist als der Durchmesser der Riemenscheibe 16. Der Durchmesser der Riemenscheibe 16 entspricht im wesentlichen dem Innendurchmesser der Speichertrommel 2.

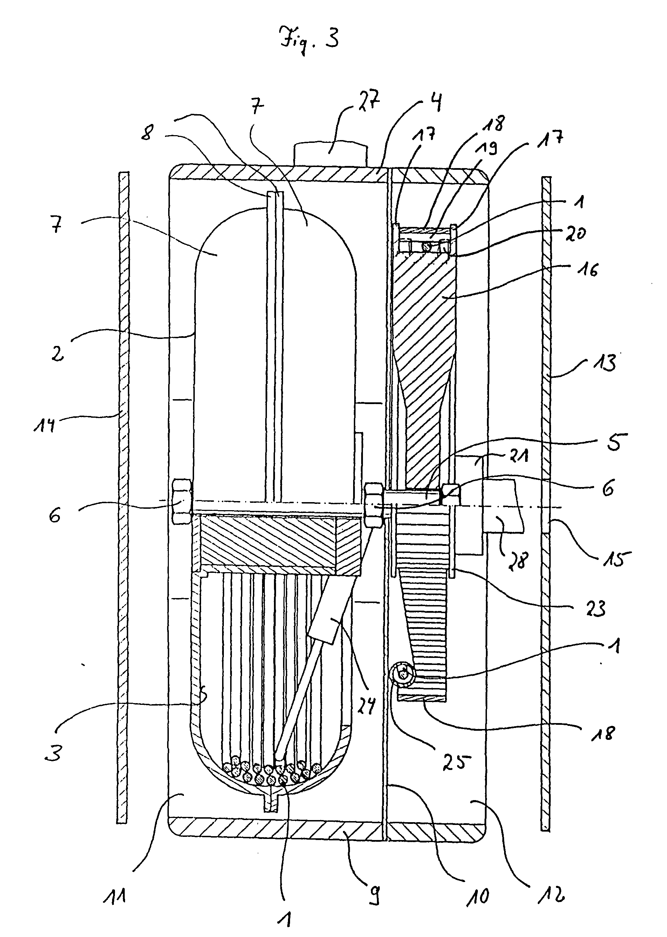

Wie aus der Figur 3 zu entnehmen ist, verläßt das strangförmige Material 1 die Speichertrommel 2, indem es in ein Führungsrohr 24 einläuft, von wo aus das Material 1, welches aus Glasfaserkunststoff mit einer Polypropylenummantelung besteht und als Schub- und Zugdraht ausgebildet ist, auf die Riemenscheibe 16 zwischen den beiden plattenförmigen Elementen 17 aufläuft und unter den Zahnriemen 18 gelangt. Das strangförmige Material 1 wird zwischen der Riemenscheibe 16 und dem Zahnriemen 18 durch die Vorspannung des Zahnriemens 18 eingeklemmt, wobei zwischen dem Zahnriemen 18 und dem Material 1 sowie zwischen dem Material 1 und der Riemenscheibe 16 eine reibschlüssige Verbindung hergestellt wird.

Das strangförmige Material 1 umschlingt die Riemenscheibe 16 in einem Winkelbereich von ungefähr 260°, bevor das strangförmige Material 1 unmittelbar nach dem Verlassen der Umfangsfläche der Riemenscheibe 16 in ein Führungsrohr 25 einläuft, welches das strangförmige Material 1 seitlich neben die Riemenscheibe 23, und zwar zwischen die Trennwand 10 und den Treibriemen 18, führt, von wo aus das strangförmige Material 1 aus dem Gehäuse 4 herausgeführt wird. Auf das freie Ende, d. h. das aus dem Gehäuse 4 herausragende Ende des Führungsrohres 25 ist ein abgewinkeltes Führungselement 26 drehbar aufgesetzt.

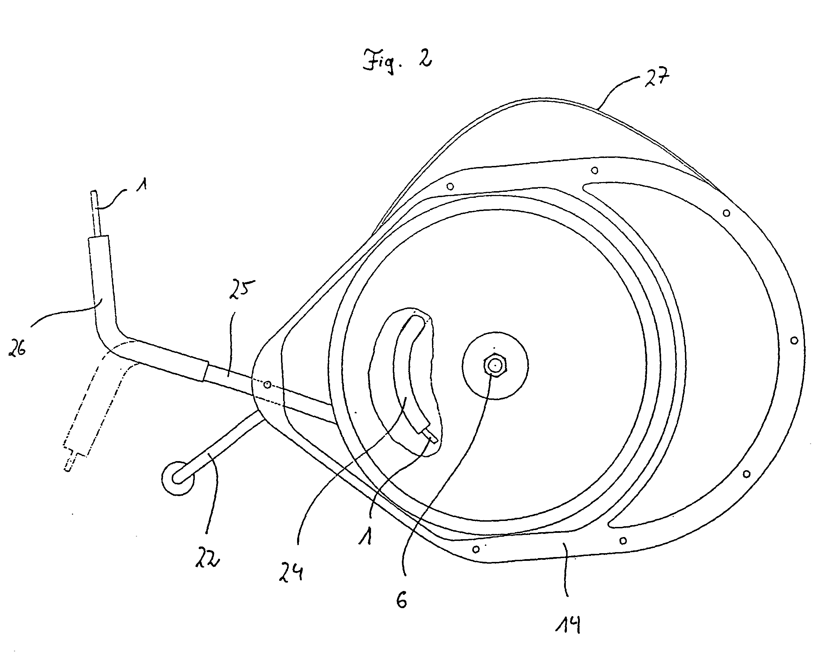

Es ist ferner aus den Figuren 1 bis 3 zu erkennen, daß an dem Gehäuse 4 ein Tragegriff 27 angeordnet ist. Schließlich zeigt die Figur 3 noch die Antriebswelle 28, welche die Handkurbel 22 mit der Riemenscheibe 23 bzw. der Achse 21 verbindet.

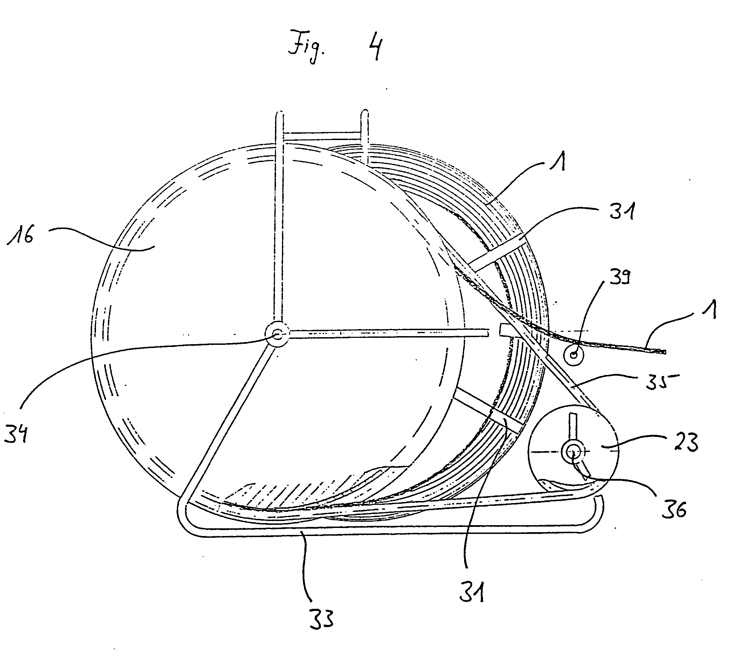

In den Figuren 4 und 5 ist eine zweite Ausführungsform der erfindungsgemäßen Vorrichtung dargestellt, die sich dadurch von der ersten Ausführungsform gemäß den Figuren 1 bis 3 unterscheidet, daß das biegeelastische, strangförmige Material 1 in einer als Käfig 30 ausgebildeten Speichertrommel angeordnet ist. Der Käfig 30 besteht aus mehreren im Querschnitt im wesentlichen U-förmig ausgebildeten Haltearmen 31, die mit einem Ende an einer Drehachse 32 befestigt und im gleichmäßigen Abschnitt auf einer Kreisbahn angeordnet sind.

Die Drehachse 32 ist in einem Lagergestell 33 gelagert, in welchem sich der Käfig 30 drehen läßt.

In dem Lagergestell 33 ist ferner eine weitere Achse 34 angeordnet, die versetzt zur Drehachse 32 verläuft und auf welcher eine Riemenscheibe 16 drehfest befestigt ist. Die Riemenscheibe 16 wird von einem Treibriemen 35 in einem Teilumfangsbereich umschlungen. Der Treibriemen 35 umschlingt ferner eine zweite, einen kleineren Durchmesser aufweisende Riemenscheibe 23, die ebenfalls auf einer Achse 36 im Lagergestell 33 gelagert ist. Die Achse 36 ist hierbei durch einen Elektromotor 37 mit einem vorgeschaltenen Getriebe 38 angetrieben.

Das aus dem Käfig 30 abgezogene Material 1 läuft im unteren Bereich der Riemenscheibe 16 auf die Umfangsfläche der Riemenscheibe 16 auf und wird zwischen der Riemenscheibe 16 und dem Treibriemen 35 eingeklemmt, so daß das Material 1 reibschlüssig mit dem Treibriemen 35 und der Riemenscheibe 16 verbunden ist. Das Material 1 umschlingt die Riemenscheibe 16 im gleichen Winkelbereich wie der Treibriemen 35, bevor das Material 1 die Umfangsfläche der Riemenscheibe 16 verläßt und über eine Führungsrolle 39 geführt beispielsweise einem Kabelleerrohr zugeführt wird. Die Führungsrolle 39 ist hierbei ebenfalls im Lagergestell 33 angeordnet.

Die voranstehend genannte Vorrichtung eignet sich insbesondere für solche Einsatzzwecke, bei denen große Längen des biegeelastischen, strangförmigen Materials 1 auf- bzw. abgerollt werden müssen. Hierbei ist insbesondere an die Verlegung von Erdkabeln in entsprechenden Kabelleerrohren zu denken.

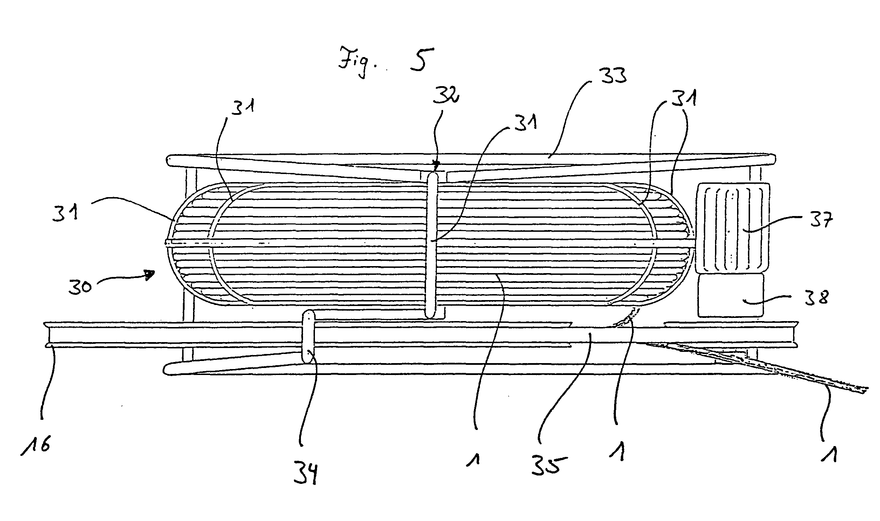

In den Figuren 6 bis 8 sind verschiedene Ausgestaltungen der Riemenscheibe 16 bzw. des Zahnriemens 18 oder des Treibriemens 35 dargestellt.

In der Figur 6 ist eine erste Ausführung dargestellt, wobei der Zahnriemen 18 eine halbkreisförmige und auf die Außenkontur des Materials 1 abgestimmte Ausnehmung 40 im Bereich seiner Zähne 19 hat. Die zweite in Figur 7 dargestellte Ausführungsform sieht eine Ausnehmung 41 im Nutgrund der zwischen den Elementen 17 im Außenumfangsbereich der Riemenscheibe 16 gebildeten umlaufenden Nut vor.

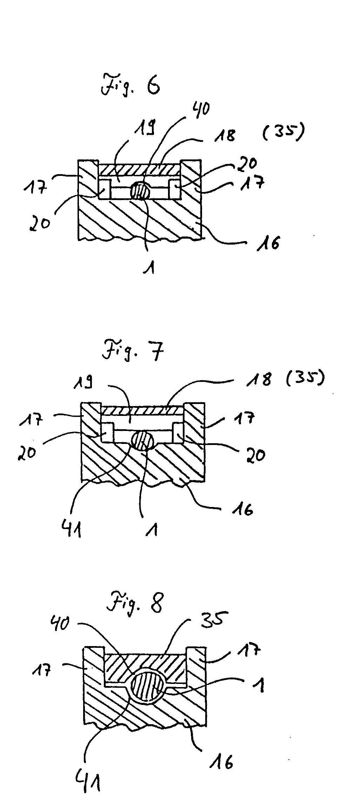

Schließlich zeigt die Figur 8 eine dritte Ausführungsform, bei der sowohl im Treibriemen 35 als auch im Nutgrund der zwischen den Elementen 17 ausgebildeten Nut Ausnehmungen 40 und 41 angeordnet sind, die entsprechend der Außenkontur des Materials 1 in ihrer Querschnittsform vorgesehen sind.

### Bezugszeichenliste

- 1: Material
- 2: Speichertrommel
- 3: Innenwandung
- 4: Gehäuse
- 5: Drehachse
- 6: Mutter
- 7: Schale
- 8: Flansch
- 9: Rahmen
- 10: Trennwand
- 11: Abschnitt
- 12: Abschnitt
- 13: Seitenwandung
- 14: Seitenwandung
- 15: Öffnung
- 16: Riemenscheibe
- 17: Element
- 18: Zahnriemen
- 19: Zahn
- 20: Zahnelement
- 21: Achse
- 22: Handkurbel
- 23: Riemenscheibe
- 24: Führungsrohr
- 25: Führungsrohr
- 26: Führungselement
- 27: Tragegriff
- 28: Antriebswelle

- 30: Käfig
- 31: Haltearm
- 32: Drehachse
- 33: Lagergestell
- 34: Achse
- 35: Treibriemen
- 36: Achse
- 37: Elektromotor
- 38: Getriebe
- 39: Führungsrolle
- 40: Ausnehmung
- 41: Ausnehmung

## Patentansprüche

1. Vorrichtung zum Aufnehmen und Abziehen eines biegeelastischen strangförmigen Materials (1) insbesondere eines im Querschnitt vorzugsweise kreisförmig ausgebildeten Schub- und Zugdrahtes, insbesondere aus Glasfaserkunststoff, vorzugsweise zum Einziehen von Kabeln, Lichtleitern und/oder sonstigen Leitungen in Kabel- oder Leitungsschutzrohre oder Leerrohre, mit einer Speichertrommel (2) an deren Innenwandung (3) sich das biegeelastische Material (1) anlegt, und einem Gehäuse (4) oder einem Lagergestell (33), in welchem eine Drehachse (5, 32) zur drehbaren Lagerung der Speichertrommel (2) angeordnet ist, wobei das strangförmige Material (1) nach dem Austritt aus der Speichertrommel (2) und vor dem Austritt aus dem Gehäuse (4) oder dem Lagergestell (33) zumindest über einen Teilabschnitt mittels eines kraftschlüssig auf das strangförmige Material (1) wirkenden Antriebsmittels antreibbar ist,
**dadurch gekennzeichnet,**
**daß** das Antriebsmittel als endloser Treibriemen (18, 35) ausgebildet ist, welcher über zumindest zwei Riemenscheiben (16, 23) umläuft, wobei zumindest eine Riemenscheibe (16) auf der Drehachse (5) drehfest befestigt ist und wobei zumindest eine Riemenscheibe (23) angetrieben ist.

2. Vorrichtung nach Anspruch 1,
**dadurch gekennzeichnet,**
**daß** das strangförmige Material (1) über einen Teilumfang zumindest einer Riemenscheibe (16) zwischen der Riemenscheibe (16) und dem Treibriemen (18, 35) angeordnet ist.

3. Vorrichtung nach Anspruch 1,
**dadurch gekennzeichnet,**
**daß** der Treibriemen als Zahnriemen (18) und zumindest eine Riemenscheibe (16) als Zahnscheibe ausgebildet ist.

4. Vorrichtung nach Anspruch 1,
**dadurch gekennzeichnet,**
**daß** die zweite Riemenscheibe (23) auf einer im Abstand zur Drehachse (5, 32) angeordneten Achse (21; 36) innerhalb des Gehäuses (4) oder des Lagergestells (33) angeordnet ist.

5. Vorrichtung nach Anspruch 4,
**dadurch gekennzeichnet,**
**daß** die auf der Achse (21, 36) drehfest befestigte Riemenscheibe (23) angetrieben ist.

6. Vorrichtung nach Anspruch 1,
**dadurch gekennzeichnet, daß** der Treibriemen (18, 35) über zwei Riemenscheiben (16, 23) mit unterschiedlichem Durchmesser umläuft und daß vorzugsweise die Riemenscheibe (23) mit dem kleineren Durchmesser angetrieben ist.

7. Vorrichtung nach Anspruch 1,
**dadurch gekennzeichnet,**
**daß** die auf der Drehachse (5, 32) drehfest angeordnete Riemenscheibe (16) einen Durchmesser aufweist, der im wesentlichen mit dem Durchmesser der Speichertrommel (2) übereinstimmt.

8. Vorrichtung nach Anspruch 1,
**dadurch gekennzeichnet,**
**daß** jede Riemenscheibe (16, 23) eine im Querschnitt U-förmig ausgebildete Führungsnut für den Treibriemen (18, 35) hat, welche umfangsseitig angeordnet ist.

9. Vorrichtung nach Anspruch 8,
**dadurch gekennzeichnet,**
**daß** im seitlichen Randbereich der Führungsnut Zahnelemente (20) angeordnet sind, die mit korrespondierenden Zähnen (19) des Treibriemens (18) kämmen.

10. Vorrichtung nach Anspruch 8,
**dadurch gekennzeichnet,**
**daß** im Nutgrund der Führungsnut eine im Querschnitt im wesentlichen halbkreisförmig ausgebildete Ausnehmung (41) angeordnet ist, deren Radius mit dem Radius des strangförmigen Materials (1) im wesentlichen übereinstimmt.

11. Vorrichtung nach Anspruch 1,
**dadurch gekennzeichnet,**
**daß** der Treibriemen (18, 35) an seiner den Riemenscheiben (16, 23) zugewandten Fläche eine im Querschnitt im wesentlichen halbkreisförmig ausgebildete Ausnehmung (40) hat, deren Radius mit dem Radius des strangförmigen Materials (1) im wesentlichen übereinstimmt.

12. Vorrichtung nach Anspruch 1,
**dadurch gekennzeichnet,**
**daß** das strangförmige Material (1) die Riemenscheibe (16) mit einem Umschlingungswinkel zwischen 180° und 280° umschlingt.

13. Vorrichtung nach Anspruch 1,
**dadurch gekennzeichnet,**
**daß** das strangförmige Material (1) vor und / oder nach Erreichen der umschlungenen Riemenscheibe (16) einem Führungsrohr (24, 25) geführt ist.

14. Vorrichtung nach Anspruch 13,
**dadurch gekennzeichnet,**
**daß** auf das, das strangförmige Material (1) aus dem Gehäuse (4) führende Führungsrohr (25) ein abgewinkeltes Führungselement (26) aufsteckbar ist, welches drehbar auf dem Führungsrohr (25) gehalten und vorzugsweise am Führungsrohr (25) arretierbar ist.

15. Vorrichtung nach Anspruch 13,
**dadurch gekennzeichnet,**
**daß** das das strangförmige Material (1) aus dem Gehäuse (4) führende Führungsrohr (25) seitlich neben dem Treibriemen (18), vorzugsweise zwischen dem Treibriemen (18) und der Speichertrommel (2) angeordnet ist.

16. Vorrichtung nach Anspruch 1,
**dadurch gekennzeichnet,**
**daß** der Treibriemen (18) über eine Riemenscheibe (23) manuell, vorzugsweise über eine Handkurbel (22), angetrieben ist.

17. Vorrichtung nach Anspruch 1,
**dadurch gekennzeichnet,**
**daß** der Treibriemen (35) über eine Riemenscheibe (23) motorisch, insbesondere elektromotorisch oder hydromotorisch, angetrieben ist.

18. Vorrichtung nach Anspruch 1,
**dadurch gekennzeichnet,**
**daß** das strangförmige Material (1) über eine außerhalb des Lagergestells (33) angeordnete Laufrolle (39) geführt ist.

19. Vorrichtung nach Anspruch 1,
**dadurch gekennzeichnet,**
**daß** die Speichertrommel als Käfig (30) ausgebildet ist, welcher mehrere, zumindest drei, vorzugsweise vier bis sechs, im Querschnitt L- oder U-förmig ausgebildete Haltearme (31) hat und drehbar im Lagergestell (33) gelagert ist.

20. Vorrichtung nach Anspruch 1,
**dadurch gekennzeichnet,**
**daß** die von dem strangförmigen Material (1) teilweise umschlungene Riemenscheibe (16) drehfest auf einer Achse (34) angeordnet ist, die parallel und versetzt zur Drehachse (32) im Lagergestell (33) angeordnet ist.

21. Vorrichtung nach Anspruch 8,
**dadurch gekennzeichnet,**
**daß** die in zumindest einer Riemenscheibe (16, 23) ausgebildete Führungsnut geringfügig schmaler ist als die Breite des Treibriemens (18, 35) und/oder des strangförmigen Materials (1).

22. Vorrichtung nach Anspruch 1,
**dadurch gekennzeichnet,**
**daß** der Treibriemen (18, 35) aus einem elastischen, insbesondere hochelastischen Material besteht, welches einen hohen Haftreibungskoeffizienten aufweist.

23. Vorrichtung nach Anspruch 8,
**dadurch gekennzeichnet,**
**daß** die Mantelflächen der Riemenscheiben (16, 23) und/oder die Führungsnuten mit einer Auflage bzw. Auskleidung aus einem elastischen Material versehen sind, welches einen hohen Haftreibungskoeffizienten aufweist.

24. Vorrichtung nach Anspruch 22 und / oder 23,
**dadurch gekennzeichnet,**
**daß** das elastische Material eine Profilierung aufweist.

25. Vorrichtung nach einem der Ansprüche 1 bis 24,
**dadurch gekennzeichnet,**
**daß** zwischen dem Treibriemen (18, 35) und den Riemenscheiben (16, 23) eine hohe Flächenpressung besteht.

26. Vorrichtung nach einem der Ansprüche 1 bis 25,
**dadurch gekennzeichnet,**
**daß** der Treibriemen (18, 35) über Bandführungselemente wie Kanten, Ösen, Haken, Rollen, Rohre, Gleitflächen, Gleitsteine, Gleitkissen, Fluidlager, Wälzlager oder dergleichen mit / oder ohne Beschichtung aus Teflon, PVC, PE oder V2A oder dergleichen geführt ist.

27. Vorrichtung nach Anspruch 1,
**dadurch gekennzeichnet,**
**daß** an dem Gehäuse (4) ein Tragriemen, insbesondere ein Schultertragriemen angeordnet ist.

28. Vorrichtung nach Anspruch 1,
**dadurch gekennzeichnet,**
**daß** der Treibriemen (18, 35) als Flachriemen mit / oder ohne Profilierung, insbesondere einer der Riemenscheiben (16, 23) zugewandten Verzahnung ausgebildet ist.

29. Vorrichtung nach Anspruch 1,
**dadurch gekennzeichnet,**
**daß** der Treibriemen (18, 35) zumindest in einem Teilabschnitt als Kette ausgebildet ist.

30. Vorrichtung nach einem der Ansprüche 1 bis 29,
**dadurch gekennzeichnet,**
**daß** zumindest ein Spannelement, vorzugsweise eine Spannrolle vorgesehen ist, die vorzugsweise in eine Riemenscheibe (16, 23) integriert ist.

31. Vorrichtung nach einem der Ansprüche 1 bis 30,
**dadurch gekennzeichnet,**
**daß** zumindest eine Ablenkrolle vorgesehen ist, über welche der Treibriemen (18, 35) läuft.

32. Vorrichtung nach einem der Ansprüche 1 bis 31,
**dadurch gekennzeichnet,**
**daß** die Speichertrommel (2) lösbar im Gehäuse (4) angeordnet ist.

33. Vorrichtung nach einem der Ansprüche 1 bis 32,
**dadurch gekennzeichnet,**
**daß** ein den Antrieb abschaltender Endabschalter vorgesehen ist, der vorzugsweise sowohl beim Erreichen der Endstellung des abgerollten strangförmigen Materials (1) als auch der Endstellung des eingezogenen Materials (1) aktivierbar und vorzugsweise elektrisch, insbesondere induktiv, kapazitiv oder konduktiv arbeitend ausgebildet ist.

34. Vorrichtung nach Anspruch 1,
**dadurch gekennzeichnet,**
**daß** im Bereich des auf die Riemenscheibe (16) auflaufenden bzw. ablaufenden Treibriemens (18, 35) Anpreßrollen angeordnet sind, die ein Abheben des Treibriemens (18, 35) und / oder des strangförmigen Materials (1) von der Riemenscheibe (16) in diesem Bereich verhindern und die ein Einfädeln des strangförmigen Materials (1) zwischen Riemenscheibe (16) und Treibriemen (18, 35) und / oder in die Führungsrohre (24, 25) manipulationsfrei ermöglichen.

35. Vorrichtung nach Anspruch 1,
**dadurch gekennzeichnet,**
**daß** die Speichertrommel (2) und die Riemenscheibe (16) auf einer gemeinsamen Drehachse (5) gelagert sind.

36. Vorrichtung nach Anspruch 1,
**dadurch gekennzeichnet,**
**daß** der Treibriemen (18, 35) über mehrere Umlenkrollen in einer Schleife geführt ist.

37. Vorrichtung nach Anspruch 1,
**dadurch gekennzeichnet,**
**daß** die Riemenscheibe (16, 23) bzw. die Riemenscheiben (16, 23) in am Außenumfang derselben anliegenden Rollen gelagert ist bzw. sind.

## Claims

1. Apparatus for taking up and paying out flexible elastic strand material (1), particularly a push and pull wire which preferably has a circular cross-section and is particularly made of glass fibre plastic material, preferably intended for pulling cables, optical fibres and/or other lines into cable or line protection tubes or into empty tubes, said apparatus comprising a storage drum (2) having an inner wall (3) where said flexible elastic material (1) rests against, and a housing (4) or a supporting frame (33) having arranged therein a rotational axis (5, 32) for supporting the storage drum (2) for rotation, wherein said strand material (1) after leaving the storage drum (2) and prior to leaving the housing (4) or the supporting frame (33) can be driven at least over a part-portion thereof by a driving means which acts upon said strand material (1) in a non-positive fashion,
**characterized in**
**that** the driving means is configured as an endless driving belt (18, 35) passing over at least two pulleys (16, 23), at least one pulley (16) being fixed against rotation on the rotational axis (5) and at least one pulley (23) being driven.

2. Apparatus according to claim 1,
**characterized in**
**that** over a part of the circumference of at least one pulley (16) the strand material (1) is arranged between said pulley (16) and the driving belt (18, 35).

3. Apparatus according to claim 1,
**characterized in**
**that** the driving belt is configured as a toothed belt (18) and that at least one pulley (16) is configured as a toothed disk.

4. Apparatus according to claim 1,
**characterized in**
**that** the second pulley (23) is arranged on a shaft (21; 36) provided at a distance from the rotational axis (5, 32) inside the housing (4) or the supporting frame (33).

5. Apparatus according to claim 4,
**characterized in**
**that** the pulley (23) fixed against rotation on said shaft (21, 36) is a driven pulley.

6. Apparatus according to claim 1,
**characterized in**
**that** the driving belt (18, 35) passes over two pulleys (16, 23) of a different diameter and that preferably pulley (23) which has the smaller diameter is the driven pulley.

7. Apparatus according to claim 1,
**characterized in**
**that** the pulley (16) which is fixed against rotation on the rotational axis (5, 32) has a diameter which substantially corresponds with the diameter of the storage drum (2).

8. Apparatus according to claim 1,
**characterized in**
**that** each pulley (16, 23) has a circumferentially arranged U-shaped guide groove for the driving belt (18, 35).

9. Apparatus according to claim 8,
**characterized in**
**that** in the lateral rim portion of the guide groove are arranged tooth elements (20) which mesh with corresponding teeth (19) of the driving belt (18).

10. Apparatus according to claim 8,
**characterized in**
**that** in the bottom of the guide groove a recess (41) is provided which has a substantially semicircular cross-section, of which the radius substantially corresponds with the radius of the strand material (1).

11. Apparatus according to claim 1,
**characterized in**
**that** the driving belt (18, 35) on its surface facing the pulleys (16, 23) has a recess (40) with a substantially semicircular cross-section, of which the radius corresponds with the radius of the strand material (1).

12. Apparatus according to claim 1,
**characterized in**
**that** the strand material (1) wraps around the pulley (16) with an angle of wrap of between 180° and 280°.

13. Apparatus according to claim 1,
**characterized in**
**that** the strand material (1) prior to and/or after reaching the wrapped pulley (16) is guided in a guide tube (24, 25).

14. Apparatus according to claim 13,
**characterized in**
**that** an angled guide member (26) can be plug-fitted to the guide tube (25) leading the strand material (1) out of the housing (4), which guide member is supported for rotation on said guide tube (25) and preferably can be locked on said guide tube (25).

15. Apparatus according to claim 13,
**characterized in**
**that** the guide tube (25) which leads the strand material (1) out of the housing (4) is arranged laterally next to the driving belt (18), preferably between the driving belt (18) and the storage drum (2).

16. Apparatus according to claim 1,
**characterized in**
**that** the driving belt (18) is manually driven via a pulley (23), preferably through a crank handle (22).

17. Apparatus according to claim 1,
**characterized in**
**that** the driving belt (18) is motor-driven via a pulley (23), preferably through an electric motor or a hydro motor.

18. Apparatus according to claim 1,
**characterized in**
**that** the strand material (1) is guided over a roller (39) arranged outside of the supporting frame (33).

19. Apparatus according to claim 1,
**characterized in**
**that** the storage drum is configured as a cage (30) that has several and at least three and preferably four to six L- or U-shaped supporting arms (31) which are supported for rotation in the supporting frame (33).

20. Apparatus according to claim 1,
**characterized in**
**that** the pulley (16) which is partly wrapped by the strand material (1) is fixed against rotation on a shaft (34) which is arranged in parallel with and offset from the rotational axis (32) in the supporting frame (33).

21. Apparatus according to claim 8,
**characterized in**
**that** the guide groove which is formed in at least one pulley (16, 23) is slightly narrower than the width of the driving belt (18, 35) and/or the strand material (1)

22. Apparatus according to claim 1,
**characterized in**
**that** the driving belt (18, 35) is made of an elastic material and particularly of a highly elastic material which has a high coefficient of adhesion.

23. Apparatus according to claim 8,
**characterized in**
**that** the outer surfaces of the pulleys (16, 23) and/or the guide grooves are provided with a layer or lining of an elastic material having a high coefficient of adhesion.

24. Apparatus according to claim 22 and/or claim 23,
**characterized in**
**that** the elastic material is profiled.

25. Apparatus according to any one of the claims 1 to 24,
**characterized in**
**that** a strong surface pressure exists between the driving belt (18, 35) and the pulleys (16, 23).

26. Apparatus according to any one of the claims 1 to 25,
**characterized in**
**that** the driving belt (18, 35) is guided over belt guide members such as edges, eyes, hooks, tubes, sliding surfaces, crossheads, sliding pads, fluid bearings, rolling contact bearings or the like, with or without a coating of teflon, PVC, PE or V2A oder the like.

27. Apparatus according to claim 1,
**characterized in**
**that** on the housing (4) a carrying strap is provided, particularly a shoulder strap.

28. Apparatus according to claim 1,
**characterized in**
**that** the driving belt (18, 35) is configured as a flat belt, with or without a profile, particularly a toothing which faces one of the pulleys (16, 23).

29. Apparatus according to claim 1,
**characterized in**
**that** the driving belt (18, 35) is configured as a chain at least in a part-portion thereof.

30. Apparatus according to any one of the claims 1 to 29,
**characterized in**
**that** at least one tension member is provided, preferably a tension roller which is preferably incorporated in one pulley (16, 23).

31. Apparatus according to any one of the claims 1 to 30,
**characterized in**
**that** at least one guide roller is provided over which the driving belt (18, 35) is passed.

32. Apparatus according to any one of the claims 1 to 31,
**characterized in**
**that** the storage drum (2) is arranged in the housing (4) in a detachable fashion.

33. Apparatus according to any one of the claims 1 to 32,
**characterized in**
**that** an end switch for cutting off the driving means is provided which is adapted to be activated both in a situation where the payed-out strand material (1) reaches its end position and in a situation where the taken-up strand material (1) reaches its end position, said switch being configured to work preferably electronically and particularly in an inductive, capacitive or conductive fashion.

34. Apparatus according to claim 1,
**characterized in**
**that** in the zone where the driving belt (18, 35) engages with or is delivered from the pulley (16) pressure rollers are provided which prevent the driving belt (18, 35) and/or the strand material (1) from lifting off the pulley (16) in this zone and which allow the strand material (1) to thread-up between the pulley (16) and the driving belt (18, 35) and/or the guide tubes (24, 25) without manipulation.

35. Apparatus according to claim 1,
**characterized in**
**that** the storage drum (2) and the pulley (16) are supported on a common rotational axis (5).

36. Apparatus according to claim 1,
**characterized in**
**that** the driving belt (18, 35) is guided over several guide rollers in a loop.

37. Apparatus according to claim 1,
**characterized in**
**that** the pulley (16, 23) or the pulleys (16, 23) is or are supported in rollers which rest against the outer circumference thereof.

## Revendications

1. Dispositif pour enrouler et dévider un matériau en forme d'écheveau flexible élastique (1), en particulier un fil de poussée et de traction de préférence configuré de section circulaire, en particulier en plastique à fibres de verre, de préférence pour insérer des câbles, guides de lumière et/ou d'autres conducteurs en tirant dans des gaines pour câbles ou conducteurs ou des gaines vides, avec un tambour de stockage (2) sur la paroi intérieure (3) duquel le matériau flexible élastique (1) se pose et un boîtier (4) ou un support de stockage (33) dans lequel un axe de rotation (5, 32) est placé pour le stockage rotatif du tambour de stockage (2), le matériau en forme d'écheveau (1) pouvant être entraîné hors du boîtier (4) ou du support de stockage (33) au moins par une section partielle au moyen d'un moyen d'entraînement agissant par adhérence sur le matériau en forme d'écheveau (1),
**caractérisé en ce**
**que** le moyen d'entraînement est configuré comme une courroie d'entraînement sans fin (18, 35) qui circule sur au moins deux poulies à courroie (16, 23), au moins une poulie à courroie (16) étant fixée résistante à la torsion sur l'axe de rotation (5) et au moins une poulie à courroie (23) étant entraînée.

2. Dispositif selon la revendication 1,
**caractérisé en ce**
**que** le matériau en forme d'écheveau (1) est placé sur une périphérie partielle d'au moins une poulie à courroie (16) entre la poulie à courroie (16) et la courroie d'entraînement (18, 35).

3. Dispositif selon la revendication 1,
**caractérisé en ce**
**que** la courroie d'entraînement est configurée comme une courroie dentée (18) et au moins une poulie à courroie (16) comme disque denté.

4. Dispositif selon la revendication 1,
**caractérisé en ce**
**que** la seconde poulie à courroie est placée sur un axe (21; 36) placé espacé de l'axe de rotation (5, 32) à l'intérieur du boîtier (4) ou du support de stockage (33).

5. Dispositif selon la revendication 4,
**caractérisé en ce**
**que** la poulie à courroie (23) fixée résistante à la rotation sur l'axe (21, 36) est entraînée.

6. Dispositif selon la revendication 1,
**caractérisé en ce**
**que** la courroie d'entraînement (18, 35) circule par deux poulies à courroie (16, 23) de diamètre différent et que de préférence la poulie à courroie (23) avec le plus petit diamètre est entraînée.

7. Dispositif selon la revendication 1,
**caractérisé en ce**
**que** la poulie à courroie (16) placée résistante à la rotation sur l'axe de rotation (5, 32) a un diamètre qui correspond substantiellement au diamètre du tambour de stockage (2).

8. Dispositif selon la revendication 1,
**caractérisé en ce**
**que** chaque poulie à courroie (16, 23) a une rainure de guidage configurée avec une section en U pour la courroie d'entraînement (18, 35) qui est placée sur le côté de la périphérie.

9. Dispositif selon la revendication 8,
**caractérisé en ce**
**que** des éléments dentés (20) qui s'engrènent avec des dents correspondantes (19) de la courroie d'entraînement (18) sont placés dans la zone marginale latérale de la rainure de guidage.

10. Dispositif selon la revendication 8,
**caractérisé en ce**
**qu'**un creux (41) configuré de section substantiellement semi-circulaire est placé dans le fond de la rainure de guidage, creux dont le rayon coïncide substantiellement avec le rayon du matériau en forme d'écheveau (1).

11. Dispositif selon la revendication 1,
**caractérisé en ce**
**que** la courroie d'entraînement (18, 35) a, sur sa surface tournée vers les courroies d'entraînement (16, 23), un creux (40) configuré de section substantiellement semi-circulaire dont le rayon coïncide avec le rayon du matériau en forme d'écheveau (1).

12. Dispositif selon la revendication 1,
**caractérisé en ce**
**que** le matériau en forme d'écheveau (1) enlace la poulie à courroie (16) avec un angle d'enroulement entre 180° et 280°.

13. Dispositif selon la revendication 1,
**caractérisé en ce**
**que** le matériau en forme d'écheveau (1) est guidé vers un tube de guidage (24, 25) avant et/ou après avoir atteint la poulie à courroie enlacée (16).

14. Dispositif selon la revendication 13,
**caractérisé en ce**
**qu'**un élément de guidage coudé (26) peut être placé sur le tube de guidage (25) qui guide le matériau en forme d'écheveau (1) hors du boîtier (4), élément de guidage qui peut être maintenu rotatif sur le tube de guidage (25) et qui peut de préférence être bloqué sur le tube de guidage (25).

15. Dispositif selon la revendication 13,
**caractérisé en ce**
**que** le tube de guidage (25) qui guide le matériau en forme d'écheveau (1) hors du boîtier (4) est placé latéralement près de la courroie d'entraînement (18), de préférence entre la courroie d'entraînement (18) et le tambour de stockage (2).

16. Dispositif selon la revendication 1,
**caractérisé en ce**
**que** la courroie d'entraînement (18) est entraînée par une poulie à courroie (23) manuellement, de préférence par une manivelle (22).

17. Dispositif selon la revendication 1,
**caractérisé en ce**
**que** la courroie d'entraînement (35) est entraînée par un moteur, en particulier par un moteur électrique ou par un moteur hydraulique par l'intermédiaire d'une poulie à courroie (23).

18. Dispositif selon la revendication 1,
**caractérisé en ce**
**que** le matériau en forme d'écheveau (1) est guidé par l'intermédiaire d'un galet de roulement (39) placé à l'extérieur du support de stockage (33).

19. Dispositif selon la revendication 1,
**caractérisé en ce**
**que** le tambour de stockage est configuré comme une cage (30) qui a plusieurs bras de support (31) configurés de section en L ou en U, au moins trois, de préférence quatre à six, et est positionné rotatif dans le support de stockage (33).

20. Dispositif selon la revendication 1,
**caractérisé en ce**
**que** la poulie d'entraînement (16) partiellement enlacée par le matériau en forme d'écheveau (1) est placée résistante à la rotation sur un axe (34) qui est placé dans le support de stockage (33) parallèlement et décalé par rapport à l'axe de rotation (32).

21. Dispositif selon la revendication 8,
**caractérisé en ce**
**que** la rainure de guidage configurée dans au moins une poulie d'entraînement (16, 23) est légèrement plus étroite que la largeur de la courroie d'entraînement (18, 35) et/ou du matériau en forme d'écheveau (1).

22. Dispositif selon la revendication 1,
**caractérisé en ce**
**que** la courroie d'entraînement (18, 35) est en un matériau élastique, en particulier très élastique, qui a un coefficient d'adhérence élevé.

23. Dispositif selon la revendication 8,
**caractérisé en ce**
**que** les surfaces latérales des poulies à courroie (16, 23) et/ou les rainures de guidage sont pourvues d'une couche ou d'un revêtement en un matériau élastique qui a un coefficient d'adhérence élevé.

24. Dispositif selon la revendication 22 et/ou 23,
**caractérisé en ce**
**que** le matériau élastique présente un profilage.

25. Dispositif selon l'une des revendications 1 à 24,
**caractérisé en ce**
**qu'**il y a une pression superficielle élevée entre la courroie d'entraînement (18, 35) et les poulies à courroie (16, 23).

26. Dispositif selon l'une des revendications 1 à 25,
**caractérisé en ce**
**que** la courroie d'entraînement (18, 35) est guidée par des éléments de guidage de bande comme des arêtes, oeillets, crochets, galets, tubes, "surfaces de glissement, glisseurs, coussins coulissants, paliers à fluide, paliers à roulement ou équivalent avec/ou sans enduction de téflon, PVC, polyéthylène ou V2A ou équivalent.

27. Dispositif selon la revendication 1,
**caractérisé en ce**
**qu'**une courroie de port, en particulier une bandoulière, est placée sur le boîtier (4).

28. Dispositif selon la revendication 1,
**caractérisé en ce**
**que** la courroie d'entraînement (18, 35) est configurée comme une courroie plate avec/ou sans profilage, en particulier un engrenage tourné vers l'une des poulies à courroie (16, 23).

29. Dispositif selon la revendication 1,
**caractérisé en ce**
**que** la courroie d'entraînement (18, 35) est configurée comme une chaîne au moins dans une section partielle.

30. Dispositif selon l'une des revendications 1 à 29,
**caractérisé en ce**
**qu'**au moins un élément de serrage est prévu, de préférence un rouleau de tension, qui est intégré dans une poulie à courroie (16, 23).

31. Dispositif selon l'une des revendications 1 à 30,
**caractérisé en ce**
**qu'**au moins un galet de déviation est prévu par lequel passe la courroie d'entraînement (18, 35).

32. Dispositif selon l'une des revendications 1 à 31,
**caractérisé en ce**
**que** le tambour de stockage (2) est placé amovible dans le boîtier (4).

33. Dispositif selon l'une des revendications 1 à 32,
**caractérisé en ce**
**qu'**un disjoncteur de fin de course qui coupe l'entraînement est prévu qui peut être activé de préférence aussi bien en atteignant la position de fin de course du matériau en forme d'écheveau déroulé (1) que la position de fin de course du matériau rentré (1) et qui est configuré fonctionnant de préférence électriquement, en particulier par induction, de manière capacitive ou par conductivité.

34. Dispositif selon la revendication 1,
**caractérisé en ce**
**que** des galets de pression sont placés dans la zone de la courroie d'entraînement (18, 35) qui monte sur la poulie à courroie (16) ou qui en descend, galets qui empêchent un décollage de la courroie d'entraînement (18, 35) et/ou du matériau en forme d'écheveau (1) de la poulie à courroie (16) dans cette zone et qui permettent un enfilage du matériau en forme d'écheveau (1) entre la poulie à courroie (16) et la courroie d'entraînement (18, 35) et/ou dans les tubes de guidage (24, 25) sans manipulation.

35. Dispositif selon la revendication 1,
**caractérisé en ce**
**que** le tambour de stockage (2) et la poulie à courroie (16) sont positionnés sur un axe de rotation commun (5).

36. Dispositif selon la revendication 1,
**caractérisé en ce**
**que** la courroie d'entraînement (18, 35) est guidée dans une boucle par plusieurs poulies de renvoi.

37. Dispositif selon la revendication 1,
**caractérisé en ce**
**que** la poulie à courroie (16, 23) ou les poulies à courroie (16, 23) est/sont positionnée(s) dans des galets adhérant à la périphérie extérieure de celle(s)-ci-.
